# EUROPEAN PATENT SPECIFICATION

(11) **EP 4 122 972 B1**
(45) Date of publication and mention of the grant of the patent: **29.04.2026**
(21) Application number: 21771428.6
(22) Date of filing: 12.03.2021
(51) Int. Cl.: C08G 65/325, C08K 5/3445, C08L 71/03, H01M 10/052, H01M 10/0568

(54) **POLYETHER COMPOUND, IONIC COMPOSITION, AND MOLDED BODY**
POLYETHERVERBINDUNG, IONISCHE ZUSAMMENSETZUNG UND FORMKÖRPER
COMPOSÉ POLYÉTHER, COMPOSITION IONIQUE ET CORPS MOULÉ

(30) Priority: 17.03.2020 JP 2020046284
(43) Date of publication of application: 25.01.2023
(73) Proprietor: Zeon Corporation, Tokyo 100-8246 (JP)
(72) Inventor: HAYANO, Shigetaka, Tokyo 100-8246 (JP)
(74) Representative: Maiwald GmbH
(86) International application number: PCT/JP2021/010021
(87) International publication number: WO 2021/187352

(56) References cited:
- WO-A1-2014/148598
- WO-A1-2018/038202
- WO-A1-2020/066743
- US-A1- 2008 125 559
- US-A1- 2009 266 230
- HEYI HU, WEN YUAN, LANSHUO LU, HUI ZHAO, ZHE JIA, GREGORY L. BAKER: "Low glass transition temperature polymer electrolyte prepared from ionic liquid grafted polyethylene oxide", JOURNAL OF POLYMER SCIENCE PART A: POLYMER CHEMISTRY, JOHN WILEY & SONS, INC., US, vol. 52, no. 15, 1 August 2014 (2014-08-01), US , pages 2104 - 2110, XP055266973, ISSN: 0887-624X, DOI: 10.1002/pola.27217
- HU HEYI, YUAN WEN, JIA ZHE, BAKER GREGORY L.: "Ionic liquid-based random copolymers: a new type of polymer electrolyte with low glass transition temperature", RSC ADVANCES, vol. 2015, no. 5, 28 November 2014 (2014-11-28), pages 3135 - 3140, XP055859065, DOI: 10.1039/C4RA13432J

## Description

### TECHNICAL FIELD

The present invention relates to a polyether compound, and more particularly to a polyether compound having excellent carbon dioxide absorbency.

### BACKGROUND ART

A polyether compound having a cationic group, which has ion conductivity, is known to be used as an electrolyte to provide ion conductivity between electrodes, for example, in electrochemical devices such as secondary cells, fuel cells, dye sensitized solar cells, and actuators.

For example, Patent Document 1 proposes an electrolyte composition characterized by containing a polyalkylene oxide having a side chain having a cation site in the polyalkylene oxide main chain, and a counter ion of the side chain, wherein the side chain or its counter ion is liquid crystalline.

Ionic polyethers comprising a pendant imidazolium group and a counter ion are known from US2009/266230. The ionic polyethers are disclosed as being suitable for carbon dioxide absorption.

### RELATED ART

### PATENT DOCUMENTS

Patent Document 1: Japanese Patent Laid-Open No. 2002-246066

### SUMMARY OF THE INVENTION

### PROBLEM TO BE SOLVED BY THE INVENTION

It is an object of the present invention to provide a polyether compound having excellent carbon dioxide absorbency.

### MEANS FOR SOLVING THE PROBLEM

The inventors have made an attempt to use a polyether compound having a cationic group as a carbon dioxide absorbent. It has been shown, however, that a conventional polyether compound having a cationic group does not have sufficient carbon dioxide absorbency. As a result of dedicated studies to achieve the aforementioned object, the inventors have found that by introducing a side chain having a specific imidazolium structure into a polyether compound, and using a specific counter anion as a counter anion of the side chain, a polyether compound having excellent carbon dioxide absorbency can be obtained. The present invention has been accomplished as a result of such research.

Specifically, the present invention provides the use of a polyether compound including repeating units represented by general formula (1) as a carbon dioxide absorbent, wherein the polyether compound includes repeating units represented by the following general formula (2) as at least a portion of the repeating units represented by general formula (1). 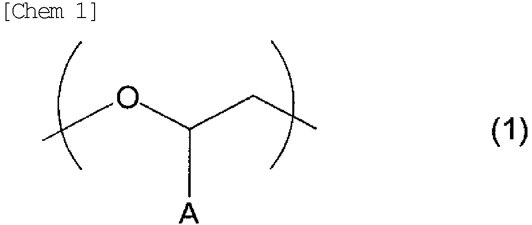 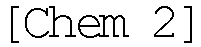 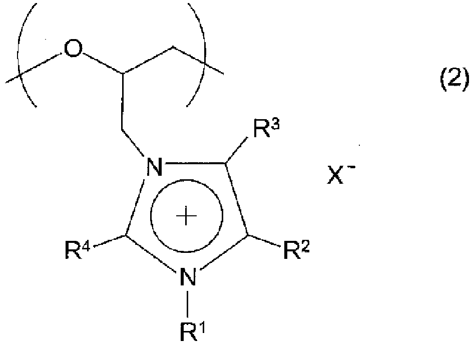 (In general formula (1), A represents a monovalent group. In general formula (2), R¹ represents an alkyl group having three or more carbon atoms, R² to R⁴ each independently represents a hydrogen atom or an alkyl group having 1 to 8 carbon atoms, and R² and R³ may be bonded to each other. In general formula (2), X⁻ represents an anion containing any one or more of nitrogen, carbon, and oxygen.)

In the polyether compound according to the present invention, the proportion of repeating units represented by general formula (2) is preferably 50 mol% or more and 100 mol% or less based on the entire repeating units represented by general formula (1).

The polyether compound according to the present invention preferably has a number average molecular weight (Mn) of 500 or more and 100,000 or less.

According to the present invention, provided is the use of an ionic composition containing the above polyether compound according to the present invention and an ion liquid as a carbon dioxide absorbent.

The content of the ion liquid is preferably 50 parts by mass or more and 3000 parts by mass or less with respect to 100 parts by mass of the polyether compound in the ionic composition according to the present invention.

Further, according to the present invention, provided is the use of a molded body containing the above polyether compound according to the present invention or the above ionic composition according to the present invention as a carbon dioxide absorbent.

### EFFECTS OF INVENTION

According to the present invention, provided is a polyether compound having excellent carbon dioxide absorbency.

### DESCRIPTION OF EMBODIMENTS

### <Polyether compound>

The polyether compound according to the present invention is a polyether compound including repeating units represented by the following general formula (1), wherein the polyether compound includes repeating units represented by the following general formula (2) as at least a portion of the repeating units represented by general formula (1). 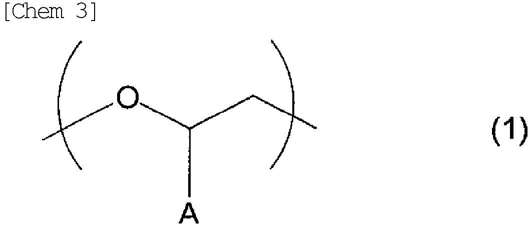 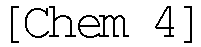 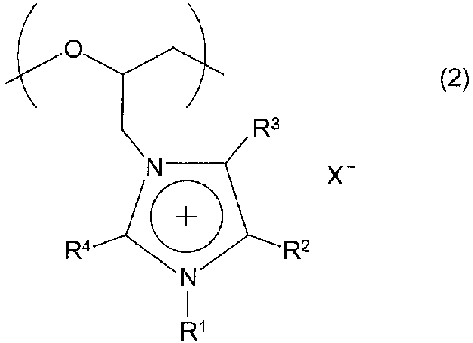 (In general formula (1), A represents a monovalent group. In general formula (2), R¹ represents an alkyl group having three or more carbon atoms, R² to R⁴ each independently represent a hydrogen atom or an alkyl group having 1 to 8 carbon atoms, and R² and R³ may be bonded to each other. In general formula (2), X⁻ represents an anion containing any one or more of nitrogen, carbon, and oxygen.)

The polyether compound according to the present invention is a polyether compound including an oxirane unit containing an imidazolium structure represented by general formula (2) as at least a portion of the repeating units represented by general formula (1). The polyether compound according to the present invention can have excellent carbon dioxide absorbency derived from the presence of repeating units represented by general formula (2).

In general formula (2), the group represented by R¹ can be any alkyl group having three or more carbon atoms, and is not particularly limited. Examples thereof include a propyl group, butyl group, pentyl group, hexyl group, heptyl group, octyl group, nonyl group, decyl group, and the like. In order to further improve the carbon dioxide adsorptivity of the polyether compound according to the present invention, the carbon number of the group represented by R¹ is preferably 4 or more, preferably 12 or less, more preferably 6 or less, further preferably 4 or 6, most preferably 4.

In general formula (2), the group represented by R¹ is not particularly limited, and may be straight-chained, or may be branched-chained. In order to further improve the carbon dioxide adsorptivity of the polyether compound according to the present invention, the group represented by R¹ is preferably straight-chained.

In general formula (2), the groups represented by R² to R⁴ each independently represent a hydrogen atom or an alkyl group having 1 to 8 carbon atoms. Examples of alkyl groups having 1 to 8 carbon atoms include, but are not particularly limited to, a methyl group, ethyl group, propyl group, isopropyl group, and the like. R² to R⁴ are each independently preferably a hydrogen atom or a methyl group, more preferably a hydrogen atom. The groups represented by R² to R⁴ may all be the same groups, or may be partially or completely different groups in the same repeating unit.

In general formula (2), R² and R³ may be bonded to each other, but R² and R³ are preferably not bonded to each other. In the case where R² and R³ are bonded to each other, an alkylene group having 1 to 16 carbon atoms is formed. Examples of such alkylene groups having 1 to 16 carbon atoms include, but are not particularly limited to, a 1,2-ethylene group, 1,3-propylene group, 1,4-butylene group, 1,5-pentylene group, 1,6-hexylene group, 4-methyl-2,2-pentylene group, 2,3-dimethyl-2,3-butylene group, and the like.

The polyether compound according to the present invention may include repeating units represented by multiple types of general formula (2) where R¹ to R⁴ differ, or may include repeating units represented by a single type of general formula (2) where R¹ to R⁴ each are the same.

In general formula (2), an anion represented by X⁻ indicates a counter anion of the imidazolium structure. The anion represented by X⁻ can be any anion containing any one or more of nitrogen, carbon, and oxygen without particular limitation, but is preferably an anion containing at least carbon in order to further improve the carbon dioxide adsorptivity of the polyether compound according to the present invention. That is, the anion represented by X⁻ is preferably an organic acid ion.

In order to further improve the carbon dioxide adsorptivity of the polyether compound according to the present invention, the number of atoms constituting the anion represented by X⁻ is preferably 2 or more, more preferably 4 or more, further preferably 6 or more, and is preferably 25 or less, more preferably 20 or less, further preferably 15 or less, particularly preferably 10 or less.

Examples of such an anion represented by X⁻ include sulfonyl imide ions such as (FSO₂)₂N⁻, (CF₃SO₂)₂N-, and (CF₃CF₂SO₂)₂N⁻; carboxylate ions such as CH₃COO⁻, C₃H₇COO⁻, CF₃COO⁻, and PhCOO⁻ (Ph indicates a phenyl group); cyanide ions such as B(CN)₄⁻, SCN, and (NC)₂N⁻; sulfonate ions such as CH₃SO₃⁻ and CF₃SO₃⁻ ; OH⁻, ClO₄⁻, and the like. In order to further improve the carbon dioxide adsorptivity of the polyether compound according to the present invention, the anion represented by X⁻ is preferably an organic acid ion, more preferably a sulfonyl imidide ion, carboxylate ion, or cyanide ion, further preferably (CF₃SO₂)₂N⁻, CH₃COO⁻, or B(CN)₄⁻.

In the entire repeating units represented by general formula (2) in the polyether compound, all of the anions represented by X⁻ may be the same anions, or may be different anions mixed.

The repeating units represented by general formula (1) are units obtained by ring-opening polymerizing the oxirane structure moiety of a compound containing an oxirane structure (oxirane monomer units).

The polyether compound according to the present invention may include a repeating unit which is represented by general formula (1) and is not represented by general formula (2). Examples of such repeating units which are represented by general formula (1) and are not represented by general formula (2) include alkylene oxide monomer units such as an ethylene oxide unit, propylene oxide unit, and 1,2-butylene oxide unit; epihalohydrin monomer units such as an epichlorohydrin unit, epibromohydrin unit, and epiiodohydrin unit; alkenyl group-containing oxirane monomer units such as an allyl glycidyl ether unit; aromatic ether group-containing oxirane monomer units such as a phenyl glycidyl ether unit; (meth)acryloyl group-containing oxirane monomer units such as a glycidyl acrylate unit and a glycidyl methacrylate unit; units having the same structure as that of the repeating units represented by general formula (2) except that the counter anion (X⁻) does not contain any of nitrogen, carbon, or oxygen; and the like. As the repeating unit which is represented by general formula (1) and is not represented by general formula (2), preferred are alkylene oxide monomer units, epihalohydrin monomer units, (meth)acryloyl group-containing oxirane monomer units, or units having the same structure as that of the repeating units represented by general formula (2) except that the counter anion (X⁻) does not contain any of nitrogen, carbon, or oxygen.

The polyether compound according to the present invention may include repeating units other than the repeating units represented by general formula (1). Examples of repeating units other than the repeating units represented by general formula (1) include oxirane monomer units having two or more substitution, such as 2,3-butylene oxide unit, and oxirane monomer units containing a ring structure, such as cyclohexene oxide.

The polyether compound according to the present invention may contain an oxirane monomer unit having a cross-linkable group. In the case where the polyether compound according to the present invention has a cross-linkable group, a cross-linkable composition can be prepared by compounding a cross-linking agent. Cross-linking this composition results in a cross-linked product which contains a cross-linked structure, and thus has improved shape retention when shaped in a predetermined shape, for example. Such an oxirane monomer unit having a cross-linkable group is not particularly limited, and examples thereof include epihalohydrin monomer units, alkenyl group-containing oxirane monomer units, (meth)acryloyl group-containing oxirane monomer units, and the like.

The polyether compound according to the present invention may contain two or more types of repeating units. A distribution pattern of those repeating units is not particularly limited in this case, but the repeating units preferably have a random distribution.

The chain structure of the polyether compound according to the present invention is not particularly limited, and may be a straight-chained structure, or may be a branched chain structure such as a graft-branched structure and a radially branched structure.

The end groups of the polyether compound according to the present invention are not particularly limited and may be any monovalent group. Specific examples of groups as the end groups include a hydrogen atom, halogen groups, alkyl groups, haloalkyl groups, a hydroxy group, an azide group, those groups represented by general formula (3), and the like.

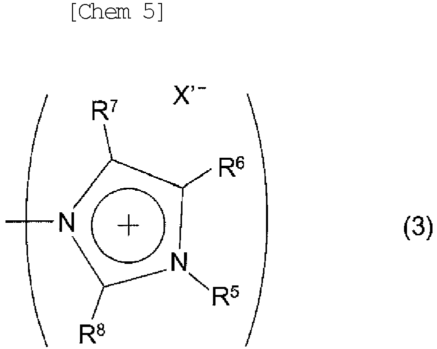

In general formula (3), R⁵ represents an alkyl group having three or more carbon atoms, R⁶ to R⁸ each independently represent a hydrogen atom or an alkyl group having 1 to 8 carbon atoms, and R⁶ and R⁷ may be bonded to each other. In general formula (3), X'⁻ represents an anion.

The number average molecular weight (Mn) of the polyether compound according to the present invention is not particularly limited, but is preferably 500 or more and 100,000 or less, more preferably 1,000 or more and 80,000 or less. Setting the number average molecular weight (Mn) of the polyether compound within the range described above imparts further improved carbon dioxide adsorptivity to the polyether compound according to the present invention.

The weight average molecular weight (Mw) of the polyether compound according to the present invention is not particularly limited, but is preferably 500 or more and 200,000 or less, more preferably 1000 or more and 160,000 or less.

The molecular weight distribution (Mw/Mn) of the polyether compound according to the present invention is not particularly limited, but is preferably 1.0 to 4.0, more preferably 1.0 to 2.0.

The number of repeating units represented by general formula (1) in the polyether compound according to the present invention is not particularly limited, but is preferably 5 to 1000, more preferably 8 to 800 as the average number per molecule. Setting the number of repeating units represented by general formula (1) within the range described above imparts further improved carbon dioxide adsorptivity to the polyether compound according to the present invention.

The number of repeating units represented by general formula (2) in the polyether compound according to the present invention is not particularly limited, but is preferably 5 to 1000, more preferably 8 to 800 as the average number per molecule. Setting the number of repeating units represented by general formula (2) within the range described above imparts further improved carbon dioxide adsorptivity to the polyether compound according to the present invention.

The proportion of repeating units represented by general formula (1) in the polyether compound according to the present invention is not particularly limited, and is preferably 90 mol% or more and 100 mol% or less, more preferably 95 mol% or more and 100 mol% or less, most preferably substantially 100 mol% based on the entire repeating units of the polyether compound according to the present invention. Setting the proportion of repeating units represented by general formula (1) within the range described above imparts further improved carbon dioxide adsorptivity to the polyether compound according to the present invention.

The proportion of repeating units represented by general formula (2) in the polyether compound according to the present invention is not particularly limited, and is preferably 50 mol% or more and 100 mol% or less, more preferably 70 mol% or more and 100 mol% or less, further preferably 90 mol% or more and 100 mol% or less, particularly preferably substantially 100 mol% based on the entire repeating units represented by general formula (1). Setting the proportion of repeating units represented by general formula (2) within the range described above imparts further improved carbon dioxide adsorptivity to the polyether compound according to the present invention.

The proportion of the oxirane monomer unit having a cross-linkable group in the polyether compound according to the present invention is not particularly limited, but is preferably 50 mol% or less, more preferably 20 mol% or less based on the entire oxirane monomer units constituting the polyether compound having a cationic group. The lower limit of the proportion of the oxirane monomer unit having a cross-linkable group is not particularly limited. From the viewpoint of making the polyether compound according to the present invention be a cross-linkable composition, which is to be cross-linked to give a cross-linked product having improved shape retention, the proportion may be 1 mol% or more.

A method for synthesizing the polyether compound according to the present invention is not particularly limited, and any synthesis method can be employed as long as the method can provide an intended polyether compound. An example of the synthesis method is shown as follows: first, a base polymer (polyether compound having no repeating units represented by general formula (2)) is obtained by the following method (A) or (B):
(A) a method for obtaining a base polymer including ring-opening polymerizing an oxirane monomer-containing monomer that contains at least epihalohydrin, such as epichlorohydrin, epibromohydrin, and epiiodohydrin, in the presence of a catalyst that contains an onium salt of a compound containing an atom from the group 15 or 16 of the periodic table and a trialkylaluminum in which alkyl groups contained are all straight-chained alkyl groups, which catalyst is disclosed in the Japanese Patent Laid-Open No. 2010-53217; or
(B) a method for obtaining a base polymer including ring-opening polymerizing an oxirane monomer-containing monomer that contains at least epihalohydrin, such as epichlorohydrin, epibromohydrin, and epiiodohydrin, in the presence of a catalyst prepared by the reaction of triisobutylaluminum with phosphoric acid and triethylamine, which catalyst is disclosed in the Japanese Patent Publication No. 46-27534.

Then, the base polymer obtained by the method (A) or (B) described above is allowed to react with an imidazole compound (quaternization reaction) to convert a halogen group constituting the epihalohydrin monomer unit of the base polymer into an imidazolium halide group, thus obtaining an imidazolium halide structure unit-containing polyether compound. Further, the imidazolium halide structure unit-containing polyether compound obtained is allowed to react with a salt of the anion (X⁻) containing any one or more of nitrogen, carbon, and oxygen and a metal cation to perform an anion-exchange reaction. This allows the halide ion constituting the imidazolium halide group to be converted into the anion (X⁻) containing any one or more of nitrogen, carbon, and oxygen, thus providing a polyether compound according to the present invention.

The imidazole compound used for the reaction of the base polymer and the imidazole compound is an imidazole compound corresponding to the imidazolium structure contained in the repeating units represented by general formula (2). The imidazole compound is not particularly limited, and examples thereof include 1-butylimidazole, 1-pentylimidazole, 1-hexyimidazole, and the like.

The method for reacting the base polymer with the imidazole compound is not particularly limited, but a method of mixing the base polymer with the imidazole compound is preferable. The method of mixing the base polymer with the imidazole compound is not particularly limited, but examples thereof include a method of adding and mixing the imidazole compound to a solution containing the base polymer, a method of adding and mixing the base polymer to a solution containing the imidazole compound, a method of preparing a solution of the imidazole compound and a solution of the base polymer separately to mix the two solutions, and the like.

The solvent suitably usable for the reaction of the base polymer and the imidazole compound is an inert solvent, and may be non-polar or polar. Examples of such non-polar solvents include aromatic hydrocarbons such as benzene and toluene; chain saturated hydrocarbons such as n-pentane and n-hexane; alicyclic saturated hydrocarbons such as cyclopentane and cyclohexane; and the like. Examples of such polar solvents include ethers such as tetrahydrofuran, anisole, and diethyl ether; esters such as ethyl acetate and ethyl benzoate; ketones such as acetone, 2-butanone, and acetophenone; non-protonic polar solvents such as acetonitrile, dimethylformamide, and dimethylsulfoxide; protonic polar solvents such as ethanol, methanol, and water; and the like. As the solvent, mixed solvents of these are suitably used. The amount of the solvent to be used is not particularly limited, but the solvent is used such that the concentration of the base polymer is preferably 1 to 50% by mass, more preferably 3 to 40% by mass.

The amount of the imidazole compound to be used for the reaction of the base polymer and the imidazole compound is not particularly limited, and can be determined according to the content of repeating units represented by general formula (2) of the intended polyether compound, and the like. Specifically, the amount of the imidazole compound to be used is in the range usually from 0.01 to 100 moles, preferably from 0.02 to 50 moles, more preferably from 0.03 to 10 moles, further preferably from 0.05 to 2 moles with respect to 1 mole of epichlorohydrin units of the base polymer used.

The pressure for the reaction of the base polymer and the imidazole compound is not particularly limited, but is usually 1 to 500 atm, preferably 1 to 100 atm, particularly preferably 1 to 50 atm. The temperature for the reaction is not particularly limited, but is usually 0 to 200°C, preferably 20 to 170°C, more preferably 40 to 150°C. The reaction time is usually 1 minute to 1,000 hours, preferably 3 minutes to 800 hours, more preferably 5 minutes to 500 hours, further preferably 30 minutes to 200 hours.

The method in which the imidazolium halide structure unit-containing polyether compound is allowed to react with a salt of the anion (X⁻) containing any one or more of nitrogen, carbon, and oxygen and a metal cation to perform an anion-exchange reaction is not particularly limited, but preferred is a method in which the imidazolium halide structure unit-containing polyether compound is mixed and reacted with a salt of the anion (X⁻) containing any one or more of nitrogen, carbon, and oxygen and a metal cation.

The conditions to perform the anion-exchange reaction are not particularly limited, and the imidazolium halide structure unit-containing polyether compound may be mixed only with a salt of the anion (X⁻) containing any one or more of nitrogen, carbon, and oxygen and a metal cation, or the anion-exchange reaction may be performed under the presence of other compounds such as an organic solvent. The amount of the salt to be used is not particularly limited, but is usually in the range from 0.01 to 100 moles, preferably 0.02 to 50 moles, more preferably 0.03 to 10 moles with respect to 1 mole of the imidazolium halide structure units of the imidazolium halide structure unit-containing polyether compound used.

The salt of the anion (X⁻) containing any one or more of nitrogen, carbon, and oxygen and a metal cation used in the anion-exchange reaction is not particularly limited, but examples thereof include lithium (bisfluorosulfone)imide (Li(FSO₂)₂N), lithium (bistrifluoromethylsulfone)imide (Li(CF₃SO₂)₂N), lithium (bispentafluoroethylsulfone)imide (Li(CF₃CF₂SO₂)₂N), sodium acetate (CH₃COONa), lithium butyrate (C₃H₇COOLi), lithium trifluoroacetate (CF₃COOLi), lithium benzoate (PhCOOLi), potassium tetracyanoborate (KB(CN)₄), lithium thiocyanate (LiSCN), lithium (biscyano)imide (Li(NC)₂N), lithium methylsulfonate (LiCH₃SO₃), lithium trifluoromethyl sulphonate (LiCF₃SO₃), potassium hydroxide (KOH), lithium perchlorate (LiClO₄); and the like.

The pressure for the anion-exchange reaction is usually 1 to 500 atm, preferably 1 to 100 atm, particularly preferably 1 to 50 atm. The temperature for the reaction is usually -30 to 200°C, preferably -15 to 180°C, more preferably 0 to 150°C. The reaction time is usually 1 minute to 1000 hours, preferably 3 minutes to 100 hours, more preferably 5 minutes to 10 hours, further preferably 5 minutes to 3 hours.

After the completion of the anion-exchange reaction, the metal cation, the halide ion, the salt thereof, and the like can be removed with a wash by water or the like or membrane separation by a membrane such as a semipermeable membrane to collect a mixture containing the polyether compound. Alternatively, the polyether compound can be extracted using a solvent such as methanol to collect a mixture containing the polyether compound. Further, the intended polyether compound can be collected in accordance with an ordinary method such as drying in vacuo, for example.

The polyether compound according to the present invention can be used as a composition by compounding an ion liquid, a metal salt such as LiPF₆, LiTFSI, and KI, a low molecular compound such as water, methanol, ethylene carbonate, ethylene glycol, or tetraethylene glycol, a filler such as carbon materials or an inorganic material, and the like. In the case where the polyether compound according to the present invention has a cross-linkable group, the polyether compound can be used as a cross-linkable composition by compounding a cross-linking agent.

### <Ionic composition>

An ionic composition according to the present invention contains the above polyether compound and an ion liquid.

The ion liquid can be any organic salt compound having a melting point of 150°C or less, and an organic salt compound having a melting point of 100°C or less is preferable, an organic salt compound having a melting point of 80°C or less is more preferable, an organic salt compound having a melting point of room temperature (25°C) or less is further preferable. Also, the ion liquid is preferably an organic salt compound formed from a cation and an anion, more preferably an organic salt compound containing an organic molecule having a single positive electric charge as a cation and a counter anion having a single negative electric charge. The ion liquid may be referred to as an ionic liquid or an ambient temperature molten salt.

The ion liquid used in the present invention is an ion liquid having a viscosity at 25°C preferably in the range of 10 to 1000 mPa·s, more preferably in the range of 10 to 500 mPa·s.

The ion liquid used in the present invention is an ion liquid having a molecular weight (molecular weight of cations and anions combined) preferably in the range of 100 to 700, more preferably in the range of 120 to 500.

Specific examples of such a cation forming the ion liquid include, but not limited to, an ammonium ion; mono-substituted ammonium ions containing a cationic nitrogen atom, such as a methylammonium ion, a butylammonium ion, a cyclohexylammonium ion, an anilinium ion, a benzylammonium ion, and an ethanolammonium ion; di-substituted ammonium ions containing a cationic nitrogen atom, such as a dimethylammonium ion, a diethylammonium ion, a dibutylammonium ion, and a nonylphenylammonium ion; tri-substituted ammonium ion containing a cationic nitrogen atom, such as a trimethylammonium ion, a triethylammonium ion, an n-butyldimethylammonium ion, a stearyldimethylammonium ion, a tributylammonium ion, a trivinylammonium ion, a triethanolammonium ion, an N,N-dimethylethanolammonium ion, and a tri (2-ethoxyethyl) ammonium ion; tetra-substituted ammonium ions containing a cationic nitrogen atom, such as a tetramethylammonium ion, a trimethylethylammonium ion, a trimethylpropylammonium ion, a trimethylbutylammonium ion, a trimethylpentylammonium ion, a trimethylhexylammonium ion, a trimethylheptylammonium ion, a trimethyloctylammonium ion, a trimethyldecylammonium ion, and a trimethyldodecylammonium ion; heterocyclic ions containing a cationic nitrogen atom, such as a piperidinium ion, a 1-methylpyrrolidinium ion, a 1-butyl-1-methylpyrrolidinium ion, an imidazolium ion, a 1-methylimidazolium ion, a 1-ethylimidazolium ion, a 1-ethyl-3-methylimidazolium ion, a 1-butyl-3-methylimidazolium ion, a benzimidazolium ion, a pyrollium ion, a 1-methylpyrrolium ion, an oxazolium ion, a benzoxazolium ion, a pyrazolium ion, an isooxazolium ion, a pyridinium ion, a 2,6- dimethylpyridinium ion, an N-butylpyridinium ion, a pyrazinium ion, a pyrimidinium ion, a pyridazinium ion, a triazinium ion, an N,N-dimethylanilinium ion, a quinolinium ion, an isoquinolinium ion, an indolinium ion, a quinoxalium ion, and an isoquinoxalium ion; ions containing a cationic phosphorus atom, such as a tributyldodecaphosphonium ion and a tetrabutylphosphonium ion; ions containing a cationic sulfur atom, such as a triphenylsulfonium ion and a tributylsulfonium ion; and the like. Among these, preferred are ions containing a cationic nitrogen atom, more preferred are heterocyclic ions containing a cationic nitrogen atom, particularly preferred are ions containing a pyrrolidinium ring, ions containing an imidazolium ring, and ions containing a pyridinium ring.

Specific examples of such an anion forming the ion liquid include the anions described above as specific examples of the anion represented by X⁻ in general formula (2). Among these, (CF₃SO₂)₂N⁻, CH₃COO⁻, or B(CN)₄ is preferable, (CF₃SO₂)₂N⁻ is more preferable. The anion forming the ion liquid is preferably the same as the anion represented by X⁻ contained in the polyether compound.

The ion liquid used in the present invention may consist of cations of the same ion species and anions of the same ion species, or either one of or the both of cations and anions may include two or more ion species mixed. That is, the ion liquid may be a single ion liquid, or may be a mixture of two or more ion liquids.

Specific examples of the ion liquid used in the present invention include 1-ethyl-3-methylimidazolium bis(trifluoromethanesulfonyl)imide, 1-butyl-3-methylimidazolium bis (trifluoromethanesulfonyl) imide, 1-ethyl-3-methylimidazolium hexafluorophosphate, 1-butyl-1-methylpyrrolidiniumbis (trifluoromethanesulfonyl)imide, N-butylpyridiniumbis(trifluoromethanesulfonyl)imide, tributyldodecaphosphoniumbis(trifluoromethanesulfonyl)imide, and the like. Among these, 1-butyl-3-methylimidazolium bis(trifluoromethanesulfonyl)imide is preferable.

The content of the ion liquid in the ionic composition according to the present invention is not particularly limited, but is preferably 10 parts by mass or more and 4000 parts by mass or less, preferably 30 parts by mass or more and 3000 parts by mass or less, more preferably 50 parts by mass or more and 2000 parts by mass or less with respect to 100 parts by mass of the polyether compound. Setting the content of the ion liquid within the range described above enables the ionic composition according to the present invention to have excellent carbon dioxide absorbency and low temperature characteristics.

### <Molded body>

A molded body according to the present invention contains the polyether compound described above or the ionic composition described above.

The molded body according to the present invention is not particularly limited, but may be formed by casting the polyether compound or the ionic composition onto a base material such as a sheet, or may be formed by impregnating a non-woven or porous body with the polyether compound or the ionic composition.

A forming method is not particularly limited, but examples thereof include:
a method of obtaining a molded body by casting the polyether compound or the ionic composition, either as it is or dissolved or dispersed in a solvent as a liquid composition, onto a base material, and
a method of obtaining a molded body by impregnating a non-woven or porous body with the polyether compound or the ionic composition, either as it is or dissolved or dispersed in a solvent as a liquid composition.

The molded body may be formed after additives such as a reinforcing agent; anti-aging agent; ultraviolet absorber; light-resistant stabilizer; tackifier; surfactant; electric conductivity imparting agent; electrolyte material; colorant (dye, pigment); flame retardant; and antistatic agent; are added to the polyether compound or the ionic composition.

In the case where the polyether compound according to the present invention has a cross-linkable group, the molded body can be obtained by adding a cross-linking agent to the polyether compound to prepare a cross-linkable composition, and then forming and cross-linking the cross-linkable composition.

The polyether compound, the ionic composition, and the molded body according to the present invention have excellent carbon dioxide absorbency, and thus can be suitably used as a carbon dioxide absorbent.

The polyether compound, the ionic composition, and the molded body according to the present invention have excellent carbon dioxide absorbency, and thus can be suitably used as a member for separating carbon dioxide, a member for storing carbon dioxide, and a member for transporting carbon dioxide. In particular, the polyether compound, ionic composition, and molded body according to the present invention have excellent carbon dioxide absorbency under ordinary pressure or high pressure (for example, 5000 hPa to 10000 hPa). Therefore, the polyether compound, the ionic composition, and the molded body according to the present invention can be suitably used as a member of an equipment for separating carbon dioxide under ordinary pressure, or as a member of an equipment for separating carbon dioxide under high pressure, for example.

The polyether compound, the ionic composition, and the molded body according to the present invention can be suitably used in applications such as absorption of carbon dioxide from natural gas, absorption of carbon dioxide from biogas, absorption of carbon dioxide from CO_{2/}CH₃-containing gas, and absorption of carbon dioxide from CO₂/N₂-containing gas, for example. A gas subjected to carbon dioxide absorption may include hydrogen sulfide, mercaptan (thiol), disulfide, carbon disulfide, and the like.

### EXAMPLES

Hereinafter, the present invention will be explained based on more detailed examples, but the present invention is not limited to these examples. Hereinafter, "parts" and "%" are mass-based unless otherwise specified. Tests and evaluations conformed to the following.

[Number average molecular weight (Mn) and molecular weight distribution (Mw/Mn)]
(1) The number average molecular weight (Mn) and molecular weight distribution (Mw/Mn) of polyepichlorohydrin A were measured, in terms of polystyrene by gel permeation chromatography (GPC) with tetrahydrofuran as a solvent. As a measuring instrument, an HLC-8320 (manufactured by TOSOH CORPORATION) was used. As a column, four TSK gel Super Multipore HZ-H's (manufactured by TOSOH CORPORATION) connected in series were used. As a detector, a differential refractometer RI-8320 (manufactured by TOSOH CORPORATION) was used.
(2) The number average molecular weight (Mn) of a polyether compound was determined as follows. Specifically, first, the average molecular weight of all repeating units constituting a polyether compound was determined from the average molecular weight of repeating units of polyepichlorohydrin A, the average molecular weight of imidazolium structure containing-oxirane monomer units, and the content of imidazolium structure containing-oxirane monomer units determined by the following (3). Then, the number of repeating units of polyepichlorohydrin A was multiplied by the average molecular weight of all the repeating units constituting the polyether compound, and the resultant value was taken as the number average molecular weight (Mn) of the polyether compound.
(3) The structure of a polyether compound and the content of imidazolium structure-containing oxirane monomer units in the polyether compound were determined as follows using a nuclear magnetic resonator (NMR). That is, first, 30 mg of a polyether compound, as a sample, was added to 1.0 mL of deuterated chloroform or deuterated dimethyl sulfoxide, and the resultant mixture was shaken for 1 hour so that the sample was dissolved uniformly. The resultant solution was then subjected to an NMR measurement to obtain a ¹H-NMR spectrum, and the structure of the polyether compound was determined in accordance with a usual method.

The content of imidazolium structure-containing oxirane monomer units in the polyether compound was calculated by the following method. That is, first, the number of moles B1 of all the oxirane monomer units was calculated from an integrated value of protons derived from the oxirane monomer units in the main chain. Next, the number of moles B2 of imidazolium structure-containing oxirane monomer units was calculated from an integrated value of protons derived from the imidazolium structure. Then, the ratio of B2 to B1 (percentage) was determined as the content of imidazolium structure-containing oxirane monomer units in the polyether compound.

### [Amount of carbon dioxide absorption]

A 1000 mg sample of each of the polyether compounds and ionic compositions obtained in Examples and Comparative Examples was coated on a glass substrate. Then, the polyether compound or ionic composition including the glass substrate was dried by a vacuum dryer at 80°C for 24 hours to remove water and volatile components. Next, the polyether compound or ionic composition including the glass substrate was allowed to stand at 1000 hPa or 8000 hPa under a carbon dioxide stream at 25°C for 24 hours so that carbon dioxide was absorbed in the polyether compound or ionic composition to saturation. The polyether compound or ionic composition in which carbon dioxide was absorbed to saturation including the glass substrate was placed in an airtight container, and introduced to a reaction tube of a temperature programmed desorption gas analyzer (Temperature Programmed Desorption-Mass Spectrometry TPD-MS; Rigaku temperature programmed desorption gas analyzer TPD type V) filled with helium. After the polyether compound or ionic composition was introduced to the furnace, the amount of carbon dioxide detected by the detector was quantitatively determined while the temperature was elevated, and thus the amount of carbon dioxide absorption per 1 g of the polyether compound or ionic composition was determined.

### [Production Example 1]

### (Living anion polymerization of epichlorohydrin)

To a glass reactor equipped with a stirrer and purged with argon, 3.22 g of tetra-normal butylammonium bromide and 50 ml of toluene were added, and the mixture was cooled to 0°C. Next, 1.256 g of triethylaluminum (1.1 equivalents with respect to tetra-normal butylammonium bromide) dissolved in 10 ml of normal hexane was added thereto, and the mixture was allowed to react for 15 minutes to obtain a catalyst composition. To the resultant catalyst composition, 10.0 g of epichlorohydrin was added, and the mixture was subjected to polymerization reaction at 0°C. After the polymerization reaction was started, the viscosity of the solution gradually rose. After 12 hours of the reaction, a small amount of water was poured into the polymerization reaction solution to stop the reaction. The resultant polymerization reaction solution was washed with a 0.1 N hydrochloric acid aqueous solution to subject the catalyst residue to deashing treatment. The residue was further washed with ion exchanged water. Then, the organic phase was dried in vacuo at 50°C for 12 hours. A colorless and transparent oily material was obtained in a yield of 9.9 g. The resultant material had a number average molecular weight (Mn) of 1,050 and a molecular weight distribution (Mw/Mn) of 1.35, according to GPC. From the foregoing, it can be said that the resultant material is an oligomer (undecamer on average) having a bromomethyl group at the polymerization initiating end and a hydroxy group at the polymerization terminating end, which is constituted by epichlorohydrin units (hereinafter, polyepichlorohydrin A).

### [Production Example 2]

### (Quaternization of polyepichlorohydrin A by 1-normal butylimidazole)

To a glass reactor equipped with a stirrer and purged with argon, 5.0 g of polyepichlorohydrin A obtained in Production Example 1, 13.4 g of 1-normal butylimidazole, and 10.0 g of acetonitrile were added, and the mixture was heated to 80°C. After reaction at 80°C for 48 hours, the mixture was cooled to room temperature to stop the reaction. After the resultant reaction product was washed with a mixture solution of toluene/methanol/water of an equal mass, the organic phase containing 1-normal butylimidazole and toluene was removed. The aqueous phase was dried under reduced pressure at 50°C for 12 hours to obtain 11.7 g of a pale red solid. This solid was subjected to ¹H-NMP, measurement and elementary analysis to be identified as a 1-normal butylimidazolium structure-containing polyether compound B having a halide ion as a counter anion, in which all the chloro groups in the repeating units of polyepichlorohydrin A as a starting material were each substituted by a 1-normal butylimidazolium chloride group, and all the bromo groups in the bromomethyl groups at the polymerization initiating ends of polyepichlorohydrin A were each substituted by a 1-normal butylimidazolium bromide group.

### [Example 1]

### (Anion exchange of polyether compound B by lithium (bistrifluoromethanesulfonyl)imide)

To a glass reactor equipped with a stirrer, 5.0 g of polyether compound B obtained in Production Example 2, 7.9 g of lithium (bistrifluoromethanesulfonyl)imide, and 20 mL of ion exchanged water were added. After reaction at room temperature for 30 minutes, the mixture was dried under reduced pressure at 50°C for 12 hours. After the resultant solid-liquid mixture was washed with water to remove inorganic salt, the liquid phase was extracted with acetone. The resultant toluene solution was dried under reduced pressure at 50°C for 12 hours to obtain 10.6 g of a viscous liquid material. The resultant viscous liquid material was subjected to ¹H-NMP, spectrum measurement and elementary analysis to be identified as a 1-normal butylimidazolium structure-containing polyether compound C having a bis(trifluoromethanesulfonyl)imide anion as a counter anion, in which all the chloride ions and bromide ions in polyether compound B as a starting material were each substituted by a bis (trifluoromethanesulfonyl) imide anion. The resultant polyether compound was used for measuring the number average molecular weight (Mn) and the amount of carbon dioxide absorption in accordance with the method described above. The results are shown in Table 1.

### [Example 2]

### (Anion exchange of polyether compound B by sodium acetate)

To a glass reactor equipped with a stirrer, 5.0 g of polyether compound B obtained in Production Example 2, 1.9 g of sodium acetate, and 20 mL of ion exchanged water were added. After reaction at room temperature for 30 minutes, the mixture was dialyzed using a semipermeable membrane for 24 hours to remove inorganic salt. The aqueous solution was dried under reduced pressure at 50°C for 12 hours to obtain 5.6 g of a pale red solid. The resultant pale red solid was subjected to ¹H-NMR spectrum measurement and elementary analysis to be identified as a 1-normal butylimidazolium structure-containing polyether compound D having an acetate anion as a counter anion, in which all the chloride ions and bromide ions in polyether compound B as a starting material were each substituted by an acetate anion. The resultant polyether compound was used for measuring the number average molecular weight (Mn) and the amount of carbon dioxide absorption in accordance with the method described above. The results are shown in Table 1.

### [Example 3]

### (Anion exchange of polyether compound B by potassium tetracyanoborate)

To a glass reactor equipped with a stirrer, 5.0 g of polyether compound B obtained in Production Example 2, 3.6 g of potassium tetracyanoborate, and 20 mL of ion exchanged water were added. After reaction at room temperature for 30 minutes, the mixture was dried under reduced pressure at 50°C for 12 hours. The soluble fraction was extracted with methanol to remove inorganic salt. The resultant methanol solution was dried under reduced pressure at 50°C for 12 hours to obtain 6.8 g of a viscous solid material. The resultant viscous solid material was subjected to ¹H-NMR spectrum measurement and elementary analysis to be identified as a 1-normal butylimidazolium structure-containing polyether compound E having a tetracyanoborate anion as a counter anion, in which all the chloride ions and bromide ions in polyether compound B as a starting material were each substituted by a tetracyanoborate anion. The resultant polyether compound was used for measuring the number average molecular weight (Mn) and the amount of carbon dioxide absorption in accordance with the method described above. The results are shown in Table 1.

### [Production Example 3]

### (Quaternization of polyepichlorohydrin A by 1-normal hexylimidazole)

To a glass reactor equipped with a stirrer and purged with argon, 5.0 g of polyepichlorohydrin A obtained in Production Example 1, 16.5 g of 1-normal hexylimidazole, and 10.0 g of acetonitrile were added, and the mixture was heated to 80°C. After reaction at 80°C for 48 hours, the mixture was cooled to room temperature to stop the reaction. After the resultant reaction product was washed with a mixture solution of toluene/methanol/water of an equal mass, the organic phase containing 1-normal hexylimidazole and toluene was removed. The aqueous phase was dried under reduced pressure at 50°C for 12 hours to obtain 13.1 g of a pale red solid. This solid was subjected to ¹H-NMR measurement and elementary analysis to be identified as a polyether compound F having a 1-normal hexylimidazolium halide group having a halide ion as a counter anion, in which all the chloro groups in the repeating units of polyepichlorohydrin A as a starting material were each substituted by a 1-normal hexylimidazolium chloride group, and all the bromo groups in the bromomethyl groups at the polymerization initiating ends of polyepichlorohydrin A were each substituted by a 1-normal hexylimidazolium bromide group.

### [Example 4]

### (Anion exchange of polyether compound F by lithium bis(trifluoromethanesulfonyl)imide)

To a glass reactor equipped with a stirrer, 5.0 g of polyether compound F obtained in Production Example 3, 6.5 g of lithium (bistrifluoromethanesulfonyl)imide, and 20 mL of ion exchanged water were added. After reaction at room temperature for 30 minutes, the mixture was dried under reduced pressure at 50°C for 12 hours. After the resultant solid-liquid mixture was washed with water to remove inorganic salt, the liquid phase was extracted with acetone. The resultant acetone solution was dried under reduced pressure at 50°C for 12 hours to obtain 9.9 g of a viscous liquid material. The resultant viscous liquid material was subjected to ¹H-NMR spectrum measurement and elementary analysis to be identified as a 1-normal hexylimidazolium structure-containing polyether compound G having a bis(trifluoromethanesulfonyl)imide anion as a counter anion, in which all the chloride ions and bromide ions in polyether compound F as a starting material were each substituted by a bis(trifluoromethanesulfonyl)imide anion. The resultant polyether compound was used for measuring the number average molecular weight (Mn) and the amount of carbon dioxide absorption in accordance with the method described above. The results are shown in Table 1.

### [Example 5]

### (Anion exchange of polyether compound F by sodium acetate)

To a glass reactor equipped with a stirrer, 5.0 g of polyether compound F obtained in Production Example 3, 1.7 g of sodium acetate, and 20 mL of ion exchanged water were added. After reaction at room temperature for 30 minutes, the mixture was dialyzed using a semipermeable membrane for 24 hours to remove inorganic salt. The aqueous solution was dried under reduced pressure at 50°C for 12 hours to obtain 5.5 g of a pale red solid. The resultant pale red solid was subjected to ¹H-NMR spectrum measurement and elementary analysis to be identified as a 1-normal hexylimidazolium structure-containing polyether compound H having an acetate anion as a counter anion, in which all the chloride ions and bromide ions in polyether compound F as a starting material were each substituted by an acetate anion. The resultant polyether compound was used for measuring the number average molecular weight (Mn) and the amount of carbon dioxide absorption in accordance with the method described above. The results are shown in Table 1.

### [Example 6]

### (Anion exchange of polyether compound F by potassium tetracyanoborate)

To a glass reactor equipped with a stirrer, 5.0 g of polyether compound F obtained in Production Example 3, 3.2 g of potassium tetracyanoborate, and 20 mL of ion exchanged water were added. After reaction at room temperature for 30 minutes, the mixture was dried under reduced pressure at 50°C for 12 hours. The soluble fraction was extracted with methanol to remove inorganic salt. The resultant methanol solution was dried under reduced pressure at 50°C for 12 hours to obtain 6.6 g of a viscous solid material. The resultant viscous solid material was subjected to ¹H-NMR spectrum measurement and elementary analysis to be identified as a 1-normal hexylimidazolium structure-containing polyether compound I having a tetracyanoborate anion as a counter anion, in which all the chloride ions and bromide ions in polyether compound F as a starting material were each substituted by a tetracyanoborate anion. The resultant polyether compound was used for measuring the number average molecular weight (Mn) and the amount of carbon dioxide absorption in accordance with the method described above. The results are shown in Table 1.

### [Example 7]

50 parts of polyether compound C obtained in Example 1 and 50 parts of 1-butyl-3-methylimidazolium bis(trifluoromethanesulfonyl)imide (viscosity at 25°C: 51 mPa·s, molecular weight: 419.36) were mixed in acetone. Next, the solvent was distilled off, and a clear ionic composition was obtained. The resultant ionic composition was used for measuring the amount of carbon dioxide absorption in accordance with the method described above. The results are shown in Table 1.

### [Example 8]

5 parts of polyether compound C obtained in Example 1 and 95 parts of 1-butyl-3-methylimidazolium bis(trifluoromethanesulfonyl)imide were mixed in acetone. Next, the solvent was distilled off, and a clear ionic composition was obtained. The resultant ionic composition was used for measuring the amount of carbon dioxide absorption in accordance with the method described above. The results are shown in Table 1.

### [Comparative Example 1]

### (Anion exchange of polyether compound B by sodium tetrafluoroborate)

To a glass reactor equipped with a stirrer, 5.0 g of polyether compound B obtained in Production Example 2, 2.5 g of sodium tetrafluoroborate, and 20 mL of water were added. After reaction at room temperature for 30 minutes, the mixture was dried under reduced pressure at 50°C for 12 hours, and was extracted with methanol to remove inorganic salt. The resultant methanol solution was dried under reduced pressure at 50°C for 12 hours to obtain 6.1 g of a viscous liquid material. The resultant viscous liquid material was subjected to ¹H-NMR spectrum measurement and elementary analysis to be identified as a 1-normal butylimidazolium structure-containing polyether compound J having a tetrafluoroborate anion as a counter anion, in which all the chloride ions and bromide ions in polyether compound B as a starting material were each substituted by a tetrafluoroborate anion. The resultant polyether compound was used for measuring the number average molecular weight (Mn) and the amount of carbon dioxide absorption in accordance with the method described above. The results are shown in Table 1.

### [Comparative Example 2]

### (Quaternization of polyepichlorohydrin A by 1-methylimidazole)

To a glass reactor equipped with a stirrer and purged with argon, 5.0 g of polyepichlorohydrin A obtained in Production Example 1, 12.1 g of 1-methylimidazole, and 10.0 g of acetonitrile were added, and the mixture was heated to 80°C. After reaction at 80°C for 48 hours, the mixture was cooled to room temperature to stop the reaction. After the resultant reaction product was washed with a mixture solution of toluene/methanol/water of an equal mass, the organic phase containing 1-methylimidazole and toluene was removed. The aqueous phase was dried under reduced pressure at 50°C for 12 hours to obtain 9.4 g of a pale red solid. This solid was subjected to ¹H-NMR measurement and elementary analysis to be identified as a 1-methylimidazolium structure-containing polyether compound K having a halide ion as a counter anion, in which all the chloro groups in the repeating units of polyepichlorohydrin A as a starting material were each substituted by a 1-methylimidazolium chloride group, and all the bromo groups in the bromomethyl groups at the polymerization initiating ends of polyepichlorohydrin A were each substituted by a 1-methylimidazolium bromide group. The resultant polyether compound was used for measuring the number average molecular weight (Mn) and the amount of carbon dioxide absorption in accordance with the method described above. The results are shown in Table 1.

### [Comparative Example 3]

### (Anion exchange of polyether compound K by lithium (bistrifluoromethanesulfonyl) imide)

To a glass reactor equipped with a stirrer, 5.0 g of polyether compound K obtained in Comparative Example 2, 8.2 g of lithium (bistrifluoromethanesulfonyl) imide, and 20 mL of ion exchanged water were added. After reaction at room temperature for 30 minutes, the mixture was dried under reduced pressure at 50°C for 12 hours. After the resultant solid-liquid mixture was washed with water to remove inorganic salt, the liquid phase was extracted with acetone. The resultant acetone solution was dried under reduced pressure at 50°C for 12 hours to obtain 11.4 g of a viscous liquid material. The resultant viscous liquid material was subjected to ¹H-NMR spectrum measurement and elementary analysis to be identified as a 1-methylimidazolium structure-containing polyether compound L having a bis(trifluoromethanesulfonyl)imide anion as a counter anion, in which all the chloride ions and bromide ions in polyether compound K as a starting material were each substituted by a bis(trifluoromethanesulfonyl)imide anion. The resultant polyether compound was used for measuring the number average molecular weight (Mn) and the amount of carbon dioxide absorption in accordance with the method described above. The results are shown in Table 1.

### [Production Example 4]

### (Quaternization of polyepichlorohydrin A by 1-ethylimidazole)

To a glass reactor equipped with a stirrer and purged with argon, 5.0 g of polyepichlorohydrin A obtained in Production Example 1, 14.1 g of 1-ethylimidazole, and 10.0 g of acetonitrile were added, and the mixture was heated to 80°C. After reaction at 80°C for 48 hours, the mixture was cooled to room temperature to stop the reaction. After the resultant reaction product was washed with a mixture solution of toluene/methanol/water of an equal mass, the organic phase containing 1-ethylimidazole and toluene was removed. The aqueous phase was dried under reduced pressure at 50°C for 12 hours to obtain 10.0 g of a pale red solid. This solid was subjected to ¹H-NMR measurement and elementary analysis to be identified as a 1-ethylimidazolium structure-containing polyether compound M having a halide ion as a counter anion, in which all the chloro groups in the repeating units of polyepichlorohydrin A as a starting material were each substituted by a 1-ethylimidazolium chloride group, and all the bromo groups in the bromomethyl groups at the polymerization initiating ends of polyepichlorohydrin A were each substituted by a 1-ethylimidazolium bromide group.

### [Comparative Example 4]

### (Anion exchange of polyether compound M by lithium (bistrifluoromethanesulfonyl)imide)

To a glass reactor equipped with a stirrer, 5.0 g of polyether compound M obtained in Production Example 4, 8.4 g of lithium (bistrifluoromethanesulfonyl) imide, and 20 mL of ion exchanged water were added. After reaction at room temperature for 30 minutes, the mixture was dried under reduced pressure at 50°C for 12 hours. After the resultant solid-liquid mixture was washed with water to remove inorganic salt, the liquid phase was extracted with acetone. The resultant acetone solution was dried under reduced pressure at 50°C for 12 hours to obtain 10.7 g of a viscous liquid material. The resultant viscous liquid material was subjected to ¹H-NMR spectrum measurement and elementary analysis to be identified as a 1-ethylimidazolium structure-containing polyether compound N having a bis(trifluoromethanesulfonyl)imide anion as a counter anion, in which all the chloride ions and bromide ions in polyether compound M as a starting material were each substituted by a bis(trifluoromethanesulfonyl)imide anion. The resultant polyether compound was used for measuring the number average molecular weight (Mn) and the amount of carbon dioxide absorption in accordance with the method described above. The results are shown in Table 1.

### [Comparative Example 5]

1-Butyl-3-methylimidazolium bis(trifluoromethanesulfonyl)imide alone was used as an ionic composition for measuring the amount of carbon dioxide absorption in accordance with the method described above. The results are shown in Table 1.

### [Comparative Example 6]

50 parts of polyether compound K obtained in Comparative Example 2 and 50 parts of 1-butyl-3-methylimidazolium bis(trifluoromethanesulfonyl)imide were mixed in acetone. Next, the solvent was distilled off, and a clear ionic composition was obtained. The resultant ionic composition was used for measuring the amount of carbon dioxide absorption in accordance with the method described above. The results are shown in Table 1.

[Table 1]

**Table 1**

| | | | Examples | | | | | | | | Comparative Examples | | | | | |
|---|---|---|---|---|---|---|---|---|---|---|---|---|---|---|---|---|
| | | | 1 | 2 | 3 | 4 | 5 | 6 | 7 | 8 | 1 | 2 | 3 | 4 | 5 | 6 |
| | Structure of polyether compound | | | | | | | | | | | | | | | |
| | R¹ in general formula (2) | | butyl group | butyl group | butyl group | hexyl group | hexyl group | hexyl group | butyl group | butyl group | butyl group | methyl group | methyl group | ethyl group | - | methyl group |
| | X⁻ in general formula (2) (*) | | TFSI | acetate | B(CN)4 | TFSI | acetate | B(CN)4 | TFSI | TFSI | BF4 | Cl | TFSI | TFSI | - | Cl |
| | Number average molecular weight (Mn) | | 5,200 | 2,700 | 3,400 | 5,600 | 3,000 | 3,700 | 5,200 | 5,200 | 3,000 | 2,000 | 4,800 | 4,900 | - | 2,000 |

| | Component | | | | | | | | | | | | | | | |
|---|---|---|---|---|---|---|---|---|---|---|---|---|---|---|---|---|
| | Polyether compound | (part) | 100 | 100 | 100 | 100 | 100 | 100 | 50 | 5 | 100 | 100 | 100 | 100 | 0 | 50 |
| | 1-Butyl-3-methylimidazolium bis(trifluoromethanesulfonyl)imide | (part) | 0 | 0 | 0 | 0 | 0 | 0 | 50 | 95 | 0 | 0 | 0 | 0 | 100 | 50 |
| | Amount of carbon dioxide absorption (1000 hPa) | (mg/g) | 1.7 | 4.4 | 3.1 | 1.4 | 3.2 | 2.6 | 1.9 | 3.2 | 0.4 | 0.1 | 0.6 | 0.7 | 0.6 | 0.3 |
| | Amount of carbon dioxide absorption (8000 hPa) | (mg/g) | 13.5 | 33.8 | 23.1 | 10.7 | 25.4 | 18.3 | 16.5 | 30.9 | 3.1 | 0.7 | 4.5 | 5.0 | 4.8 | 2.5 |

| | | | | | | | | | | | | | | | | |
|---|---|---|---|---|---|---|---|---|---|---|---|---|---|---|---|---|
| (*) TFSI: bis(trifluoromethanesulfonyl)imide anion, acetate: acetate anion, B(CN)4: tetracyanoborate anion, BF4: tetrafluoroborate anion, Cl: chloride ion, Br: bromide ion | | | | | | | | | | | | | | | | |

As shown in Table 1, the polyether compounds containing specific repeating units represented by general formula (2) had excellent carbon dioxide absorbency (Examples 1 to 8).

In contrast, the polyether compounds having an anion without any of nitrogen, carbon, or oxygen as a counter anion had poor carbon dioxide absorbency (Comparative Examples 1, 2, and 6).

The polyether compounds having an imidazolium structure without an alkyl group having three or more carbon atoms at a specific position of the imidazolium structure had poor carbon dioxide absorbency (Comparative Examples 2, 3, 4, and 6).

The ionic composition formed from 1-butyl-3-methylimidazolium bis(trifluoromethanesulfonyl)imide alone had poor carbon dioxide absorbency (Comparative Example 5).

## Claims

1. A use of a polyether compound comprising repeating units represented by the following general formula (1) as a carbon dioxide absorbent,
wherein the polyether compound comprises repeating units represented by the following general formula (2) as at least a portion of the repeating units represented by general formula (1): 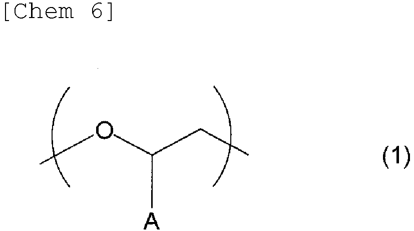 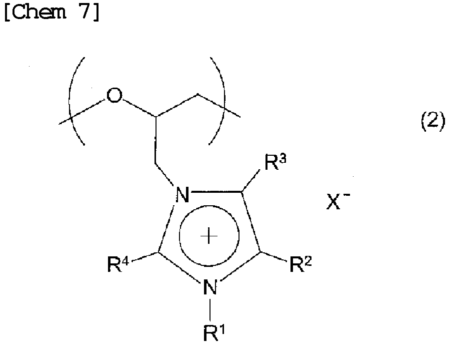 wherein A in general formula (1) represents a monovalent group, R¹ in general formula (2) represents an alkyl group having three or more carbon atoms, R² to R⁴ in general formula (2) each independently represents a hydrogen atom or an alkyl group having 1 to 8 carbon atoms, R² and R³ may be bonded to each other, and X⁻ in general formula (2) represents an anion containing any one or more of nitrogen, carbon, and oxygen.

2. The use of the polyether compound according to claim 1, wherein the proportion of repeating units represented by general formula (2) is 50 mol% or more and 100 mol% or less based on the entire repeating units represented by general formula (1).

3. The use of the polyether compound according to claim 1 or 2, wherein the polyether compound has a number average molecular weight (Mn) determined by gel permeation chromatography (GPC) as specified in the description of 500 or more and 100,000 or less.

4. The use of an ionic composition as a carbon dioxide absorbent containing the polyether compound used in any one of claims 1 to 3 and an ion liquid.

5. The use of the ionic composition according to claim 4, wherein the content of the ion liquid is 50 parts by mass or more and 3000 parts by mass or less with respect to 100 parts by mass of the polyether compound.

6. The use of a molded body as a carbon dioxide absorbent comprising the polyether compound used in any one of claims 1 to 3 or the ionic composition used in claim 4 or 5.

## Patentansprüche

1. Verwendung einer Polyetherverbindung, die sich wiederholende Einheiten umfasst, die durch die folgende allgemeine Formel (1) dargestellt werden, als Kohlendioxidabsorptionsmittel,
wobei die Polyetherverbindung sich wiederholende Einheiten umfasst, die durch die folgende allgemeine Formel (2) dargestellt werden, als mindestens einen Teil der sich wiederholenden Einheiten, die durch die allgemeine Formel (1) dargestellt werden: 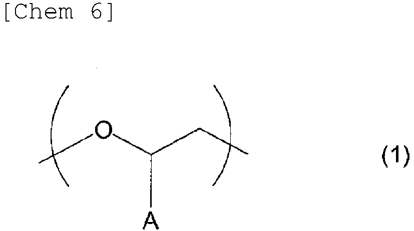 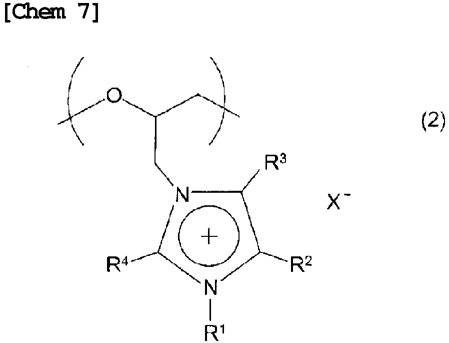 wobei A in der allgemeinen Formel (1) eine einwertige Gruppe darstellt, R¹ in der allgemeinen Formel (2) eine Alkylgruppe mit drei oder mehr Kohlenstoffatomen darstellt, R² bis R⁴ in der allgemeinen Formel (2) jeweils unabhängig voneinander ein Wasserstoffatom oder eine Alkylgruppe mit 1 bis 8 Kohlenstoffatomen darstellen, R² und R³ miteinander verbunden sein können, und X⁻ in der allgemeinen Formel (2) ein Anion darstellt, das eines oder mehrere der Elemente Stickstoff, Kohlenstoff und Sauerstoff enthält.

2. Verwendung der Polyetherverbindung gemäß Anspruch 1, wobei der Anteil der durch die allgemeine Formel (2) dargestellten sich wiederholenden Einheiten 50 Mol-% oder mehr und 100 Mol-% oder weniger, bezogen auf die gesamten durch die allgemeine Formel (1) dargestellten sich wiederholenden Einheiten, beträgt.

3. Verwendung der Polyetherverbindung gemäß Anspruch 1 oder 2, wobei die Polyetherverbindung ein durch Gelpermeationschromatographie(GPC) gemäß der Beschreibung bestimmtes zahlenmittleres Molekulargewicht (Mn) von 500 oder mehr und 100.000 oder weniger aufweist.

4. Verwendung einer ionischen Zusammensetzung als Kohlendioxidabsorptionsmittel, welche die in einem der Ansprüche 1 bis 3 verwendete Polyetherverbindung und eine ionische Flüssigkeit enthält.

5. Verwendung der ionischen Zusammensetzung gemäß Anspruch 4, wobei der Gehalt an ionischer Flüssigkeit 50 Massenteile oder mehr und 3000 Massenteile oder weniger, bezogen auf 100 Massenteile der Polyetherverbindung, beträgt.

6. Verwendung eines Formkörpers als Kohlendioxidabsorptionsmittel, umfassend die in einem der Ansprüche 1 bis 3 verwendete Polyetherverbindung oder die in Anspruch 4 oder 5 verwendete ionische Zusammensetzung.

## Revendications

1. Utilisation d'un composé polyéther comprenant des unités répétées représentées par la formule générale suivante (1) en tant qu'absorbant de dioxyde de carbone,
lequel composé polyéther comprend des unités répétées représentées par la formule générale suivante (2) en tant qu'au moins une partie des unités répétées représentées par la formule générale (1) : 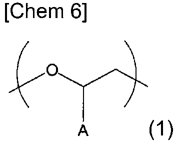 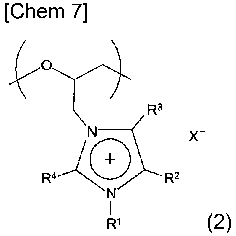
lequel A dans la formule générale (1) représente un groupe monovalent, R¹ dans la formule générale (2) représente un groupe alkyle ayant trois atomes de carbone ou plus, R² à R⁴ dans la formule générale (2) représentent chacun indépendamment un atome d'hydrogène ou un groupe alkyle ayant 1 à 8 atomes de carbone, R² et R³ pouvant être liés l'un à l'autre, et X⁻ dans la formule générale (2) représente un anion contenant un ou plusieurs éléments choisis parmi l'azote, le carbone et l'oxygène.

2. Utilisation du composé polyéther selon la revendication 1, lequel la proportion des unités répétées représentées par la formule générale (2) est de 50 % en moles ou plus et de 100 % en moles ou moins sur la base de l'ensemble des unités répétées représentées par la formule générale (1).

3. Utilisation du composé polyéther selon la revendication 1 ou 2, lequel le composé polyéther a une masse moléculaire moyenne en nombre (Mn) déterminée par chromatographie par perméation de gel (GPC) telle que spécifiée dans la description, de 500 ou plus et de 100 000 ou moins.

4. Utilisation d'une composition ionique en tant qu'absorbant de dioxyde de carbone contenant le composé polyéther utilisé selon l'une quelconque des revendications 1 à 3 et un liquide ionique.

5. Utilisation de la composition ionique selon la revendication 4, lequel la teneur du liquide ionique est de 50 parties en masse ou plus et de 3 000 parties en masse ou moins par rapport à 100 parties en masse du composé polyéther.

6. Utilisation d'un corps moulé en tant qu'absorbant de dioxyde de carbone comprenant le composé polyéther utilisé selon l'une quelconque des revendications 1 à 3 ou la composition ionique utilisée selon la revendication 4 ou 5.
